# EUROPÄISCHE PATENTANMELDUNG

(11) **EP 4 699 900 A1**
(43) Veröffentlichungstag der Anmeldung: **25.02.2026**
(21) Anmeldenummer: 24195170.6
(22) Anmeldetag: 19.08.2024
(51) Int. Cl.: B62D 21/02, B62D 21/15

(54) **KRAFTFAHRZEUG MIT EINEM TRAGENDEN FAHRZEUGRAHMEN**

(71) Anmelder: MAGNA STEYR Fahrzeugtechnik GmbH & Co KG, 8041 Graz (AT)
(72) Erfinder: MOGG, Josef, 8230 Hartberg (AT); LECHNER, David, 8052 Graz (AT)
(74) Vertreter: Zangger, Bernd

(57) **Zusammenfassung**

Ein Kraftfahrzeug mit einem tragenden Fahrzeugrahmen, wobei der Fahrzeugrahmen einen Längsträger (1) aufweist, wobei der Längsträger (1) zumindest in einem Abschnitt entlang dessen Längserstreckung, nämlich in einem Energieabsorberabschnitt, durch ein zur Fahrzeugaußenseite hin offenes Profil (2) ausgebildet ist, vorzugsweise ein C-Profil, wobei in das offene Profil (2) zumindest abschnittsweise ein Hohlkammerprofil (3) mit mehreren Hohlkammern aufgenommen ist.

## Beschreibung

### Gebiet der Erfindung

Die vorliegende Erfindung betrifft ein Kraftfahrzeug mit einem tragenden Fahrzeugrahmen, wobei der Fahrzeugrahmen zumindest einen Längsträger aufweist.

### Stand der Technik

Es ist bekannt Kraftfahrzeuge mit einem Fahrzeugrahmen, insbesondere mit einem Leiterrahmen, als tragende Struktur zu versehen. Der Fahrzeugrahmen umfasst üblicherweise zwei Längsträger in Fahrzeuglängsrichtung und meist zumindest zwei Querträger, die die beiden Längsträger verbinden. Längsträger sind üblicherweise durch Profile mit einem geschlossenen rechteckigen Querschnitt gebildet.

Es ist bekannt Kraftfahrzeuge mit einer Antriebsbatterie zum Mitführen der benötigten Antriebsenergie eines Elektro- oder Hybridfahrzeugs auszustatten. Das Gehäuse der Antriebsbatterie kann zwischen den beiden Längsträgern des Kraftfahrzeugs angeordnet sein.

Zur Abfuhr der Energie bei einem Seitenaufprall, ist es bekannt, Aluminium-Profile als Energieabsorber zu verwenden. Diese werden üblicherweise separat seitlich, an den Fahrzeugaußenseiten, neben den Rahmenlängsträgern positioniert. Längsträger und Energieabsorber benötigen relativ viel Bauraum, wodurch der maximal mögliche Bauraum für die Integration einer Antriebsbatterie verringert wird. Der notwendige Querschnitt der Energieabsorber wird jedoch durch die erforderliche Absorption der Energie im Seitencrash-Lastfall definiert. Der übliche Aufbau führt zu einer sehr hohen Torsionssteifigkeit des Rahmenverbundes im Bereich der Batterieintegration. Die sich daraus meistens ergebenden Steifigkeitssprünge am Übergang des Batteriebereiches zum Vorder- bzw. Hinterwagen des Kraftfahrzeugs stellen eine strukturelle Schwachstelle des tragenden Fahrzeugrahmens dar.

### Zusammenfassung der Erfindung

Es ist eine Aufgabe der Erfindung, ein Kraftfahrzeug mit einem tragenden Fahrzeugrahmen anzugeben, das zumindest einige der genannten Probleme verringert und insbesondere eine geringen Bauraumbedarf aufweist und ein gutes Seitenaufprallverhalten. Eine Antriebsbatterie mit hoher Kapazität soll in den tragenden Fahrzeugrahmen integrierbar bzw. integriert sein.

Die Lösung der Aufgabe erfolgt durch ein Kraftfahrzeug mit einem tragenden Fahrzeugrahmen, wobei der Fahrzeugrahmen einen Längsträger aufweist, wobei der Längsträger zumindest in einem Abschnitt entlang dessen Längserstreckung, nämlich in einem Energieabsorberabschnitt, durch ein zur Fahrzeugaußenseite hin offenes Profil ausgebildet ist, vorzugsweise ein C-Profil, wobei in das offene Profil zumindest abschnittsweise ein Hohlkammerprofil mit mehreren Hohlkammern aufgenommen ist.

Erfindungsgemäß ist ein Längsträger zumindest in einem Abschnitt entlang der Längsrichtung des Kraftfahrzeugs als ein nach außen offenes Profil, insbesondere C-Profil, ausgebildet. In dem durch das offene Profil gebildeten Hohlraum ist, an der nach außen gewandten Seite des Profils und daher im Inneren des C-Profils, ein Hohlkammerprofil angeordnet, mit mehreren Hohlkammern. Das Hohlkammerprofil erstreckt sich entlang des offenen Profils zumindest in einem Abschnitt, bevorzugt im Wesentlichen im gesamten Energieabsorberabschnitt, in dem das offene Profil ausgebildet ist.

Durch einen nach außen offenen C-förmigen Querschnitt des Längsträgers ist es möglich, ein Hohlprofil als Crashprofil, bevorzugt aus Aluminium, im Querschnitt des Längsträgers, bevorzugt aus Stahl, zu integrieren. Es ist weniger zusätzlicher Bauraumbedarf für das Hohlprofil notwendig, da das Hohlprofil nicht seitlich neben dem Längsträger angeordnet ist, sondern zumindest teilweise im Längsträger angeordnet ist. Daher ist es mit dieser Bauweise möglich den Bauraum insbesondere für eine Batterie zu vergrößern. Mit dieser Bauweise ergibt sich eine geringere Torsionssteifigkeit im Bereich der Integration des Hohlprofils und bevorzugt der Batterieintegration und daher auch geringere Steifigkeitssprünge an möglichen Übergängen zum Vorder- bzw. Hinterwagen. Die mögliche Harmonisierung des Steifigkeitsverlaufes stellt einen Vorteil in Bezug auf eine gewichtsoptimierte Auslegung der Struktur dar.

In der Gesamtbetrachtung kann im Vergleich zu bisher bekannten Lösungen Bauraum eingespart werden und eine größere Antriebsbatterie bei gleichzeitig geringem Gewicht in das Kraftfahrzeug integriert werden.

Weiterbildungen der Erfindung sind in den abhängigen Ansprüchen, der Beschreibung sowie den beigefügten Zeichnungen angegeben.

Vorzugsweise ist das offene Profil ein Stahlprofil. Das Hohlkammerprofil ist bevorzugt ein Strangpressprofil. Vorzugsweise besteht das Hohlkammerprofil aus Aluminium.

Bevorzugt füllt das Hohlkammerprofil das offene Profil in Fahrzeug Z-Richtung, also vertikal, im Wesentlichen vollständig aus. Die Erstreckung des Hohlkammerprofils in Z-Richtung kann aber auch geringer ausfallen als die Erstreckung des offenen Profils in Z-Richtung. Hierbei ist eine Anordnung des Hohlkammerprofils im oberen, unteren oder mittigen Bereich des offenen Profils vorteilhaft.

Vorzugsweise füllt das Hohlkammerprofil das offene Profil in Y-Richtung, also in Querrichtung des Fahrzeugs, im Wesentlichen vollständig aus. Das Hohlkammerprofil ist somit so weit in das offene Profil eingeschoben, dass es an der Profilwand des offenen Profils unmittelbar oder mittelbar anliegt. Vorzugsweise ist das Hohlkammerprofil in etwa gleich breit wie das offene Profil, kann aber auch weniger breit ausgestaltet sein. Vorzugsweise ragt das Hohlkammerprofil in Fahrzeug Y-Richtung zur Fahrzeugaußenseite hin über das offene Profil über und ist dabei bevorzugt breiter ausgebildet, als der Aufnahmeraum des offenen Profils. Bevorzugt ist das Hohlkammerprofil etwa doppelt so breit, wie das offene Profil.

Bevorzugt füllt das Hohlkammerprofil das offene Profil in X-Richtung, also in Fahrzeuglängsrichtung, im Wesentlichen vollständig aus, ist also im Wesentlichen im gesamten Bereich angeordnet, in dem der Längsträger durch das offene Profil gebildet wird.

Vorzugsweise ist der Längsträger zumindest in einem Abschnitt entlang dessen Längserstreckung, vor und/oder hinter dem Energieabsorberabschnitt, durch ein geschlossenes Profil ausgebildet, bevorzugt durch ein Rechteckprofil. Das geschlossene Profil ist bevorzugt aus Stahl ausgebildet. Vorzugsweise bildet das geschlossene Profil einen Vorder- und/oder Hinterwagen des Kraftfahrzeugs aus. Das oder die geschlossenen Profile gehen bevorzugt einstückig in das offene Profil über bzw. sind einteilig ausgeführt.

Vorzugsweise umfasst das Kraftfahrzeug eine Antriebsbatterie, wobei die Antriebsbatterie in Längsrichtung des Kraftfahrzeugs im Wesentlichen im Energieabsorberabschnitt angeordnet ist. Das offene Profil und das Hohlprofil sind in Längsrichtung bevorzugt zumindest dort, oder genau dort, ausgebildet, wo die Antriebsbatterie angeordnet ist.

Das Kraftfahrzeug weist bevorzugt zwei gleichartige Längsträger auf, wobei die Antriebsbatterie des Kraftfahrzeugs zwischen den beiden Längsträgern angeordnet ist. Die Antriebsbatterie und die Energieabsorberabschnitte der Längsträger sind bevorzugt in einem mittleren Teil entlang der Längserstreckung des Kraftfahrzeugs ausgebildet.

### Kurzbeschreibung der Zeichnungen

Die Erfindung wird im Folgenden beispielhaft unter Bezugnahme auf die Zeichnungen beschrieben.
- Fig. 1: ist eine Schnittansicht eines nicht erfindungsgemäßen Kraftfahrzeugs im Bereich eines Längsträgers, geschnitten durch eine Ebene normal auf den Längsträger und in Längsrichtung in einem mittleren Bereich des Längsträgers.
- Fig. 2: ist eine Schnittansicht eines erfindungsgemäßen Kraftfahrzeugs im Bereich eines Längsträgers, geschnitten durch eine Ebene normal auf den Längsträger und in Längsrichtung in einem mittleren Bereich des Längsträgers.
- Fig. 3: ist eine schematische Darstellung des erfindungsgemäßen Kraftfahrzeugs gemäß Fig. 2 von der Seite.

### Detaillierte Beschreibung der Erfindung

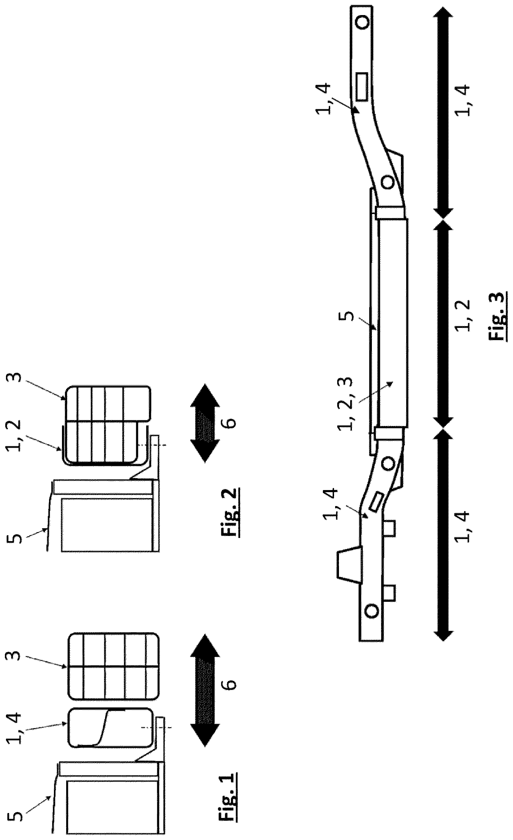

Fig. 1 ist eine Schnittansicht eines nicht erfindungsgemäßen Kraftfahrzeugs im Bereich eines Längsträgers 1, geschnitten durch eine Ebene normal auf den Längsträger 1 und in Längsrichtung in einem mittleren Bereich des Längsträgers 1. In diesem in Längsrichtung mittleren Bereich des Längsträgers 1 und des Kraftfahrzeugs ist eine Antriebsbatterie 5 zwischen den beiden Längsträgern 1 in Bodennähe des Kraftfahrzeugs angeordnet. Der Längsträger 1 ist in der nicht erfindungsgemäßen Ausführung der Fig. 1 als geschlossenes Profil 4 ausgebildet, nämlich als Rechteckprofil mit zumindest einem Versteifungssteg im Inneren des geschlossenen Profils 4. Die Antriebsbatterie 5 ist an dem Längsträger 1 verschraubt. Ein Hohlkammerprofil 3 mit mehreren Hohlkammern ist seitlich neben dem Profil des Längsträgers 1 angeordnet. Der gesamte Bauraumbedarf 6 von Längsträger 1 und Hohlkammerprofil 3 ist als Pfeil mit Bezugszeichen 6 in Fig. 1 eingezeichnet.

Fig. 2 ist eine Schnittansicht entsprechend Fig. 1, jedoch in einem erfindungsgemäßen Kraftfahrzeug. Der Bauraumbedarf 6 von Längsträger 1 und Hohlkammerprofil 3 zusammen ist auch in Fig. 2 als Pfeil mit Bezugszeichen 6 eingezeichnet und ist wesentlich kleiner als in der Lösung der Fig. 1, da der Längsträger 1 - zumindest in einem Abschnitt entlang dessen Längserstreckung, nämlich in einem Energieabsorberabschnitt, wie in Fig. 2 dargestellt, durch ein zur Fahrzeugaußenseite hin offenes Profil 2 ausgebildet ist, nämlich als ein C-Profil, wobei in das offene Profil 2 ein Hohlkammerprofil 3 mit mehreren Hohlkammern aufgenommen ist.

Das Hohlkammerprofil 3, das als Aluminiumprofil ausgebildet ist, liegt somit teilweise im Inneren des offenen Profils 2 des Längsträgers 1 aus Stahl. Die Breite von Längsträger 1 und Hohlkammerprofil 3 zusammen ist somit entsprechend geringer. Der ersparte Bauraum kann bevorzugt als zusätzlicher Bauraum für die Antriebsbatterie 5 genutzt werden, die dadurch eine höhere Kapazität aufweisen kann.

Wie in Fig. 2 dargestellt, füllt das Hohlkammerprofil 3 das offene Profil 2 in Fahrzeug Z-Richtung und Y-Richtung im Wesentlichen vollständig aus. Das Hohlkammerprofil 3 ist breiter ausgebildet als das offene Profil 2, nämlich etwa doppelt so breit, wie das offene Profil 2. Das Hohlkammerprofil 3 ragt in Fahrzeug Y-Richtung zur Fahrzeugaußenseite hin über das offene Profil 2 über.

Das Kraftfahrzeug umfasst eine Antriebsbatterie 5, die in einem Batteriegehäuse untergebracht ist. Die Antriebsbatterie 5 ist in Längsrichtung des Kraftfahrzeugs im Wesentlichen im Energieabsorberabschnitt angeordnet, also in dem Bereich, in dem der Längsträger 1 als offenes Profil 2 ausgebildet ist, somit im mittleren Drittel des Längsträgers 1. Die Antriebsbatterie 5, insbesondere das Gehäuse der Antriebsbatterie 5, ist an dem offenen Profil 2 befestigt, insbesondere verschraubt, bevorzugt mit dem unteren Schenkel des C-Profils, der sich an der Unterseite des offenen Profils 2 nach außen erstreckt. Ein Befestigungsabschnitt der Antriebsbatterie 5 kann unterhalb des Schenkels des C-Profils 2 angeordnet sein und im Überlappungsabschnitt verschraubt sein.

Das Kraftfahrzeug weist zwei gleichartige Längsträger 1 auf, wobei die Antriebsbatterie 5 in Y-Richtung zwischen den beiden Längsträgern 1 angeordnet ist.

Fig. 3 zeigt den tragenden Fahrzeugrahmen des Kraftfahrzeugs in dessen Längserstreckung, von der Seite betrachtet. Der Längsträger 1 ist nur etwa in seinem mittleren Drittel als offenes C-Profil 2 ausgebildet. In einem Abschnitt entlang dessen Längserstreckung vor und hinter dem Energieabsorberabschnitt, ist der Längsträger 1 durch ein geschlossenes Profil 4 ausgebildet, bevorzugt durch ein Rechteckprofil. In diesen Bereichen, am Vorder- und Hinterwagen, ist kein Energieabsorberelement, also kein Hohlkammerprofil, am Längsträger 1 angeordnet.

Durch geometrische und funktionale Integration des Hohlprofils, also Hohlkammerprofils bzw. Crashprofiles 3, welches primär die Funktion hat, Crashenergie bei einem Unfall zu absorbieren, in den Querschnitt des Rahmenlängsträgers 1 ist es möglich den Bauraumbedarf 6 wesentlich zu reduzieren.

Zur Integration des Crashprofiles 3 im Rahmenquerschnitt wird der geschlossene Profilquerschnitt 4 in ein nach außen offenes C-Profil 2 geändert. Dies ist im Bereich des Crashprofiles 3 hilfreich. Der Rahmenlängsträger 1 im Bereich vor und hinter diesem Bereich, dem Energieabsorberabschnitt, kann als geschlossenes Profil 4 ausgeführt werden.

Durch die Reduktion des Bauraumbedarfes 6 ist es bei gleicher Fahrzeugbreite möglich, der Batterie 5 einen größeren geometrischen Bauraum in Fahrzeug Querrichtung (Y-Richtung) zur Verfügung zu stellen. Damit einhergehend ist es auch möglich das Gewicht der Gesamtkonstruktion beziehungsweise des tragenden Fahrzeugrahmens zu senken.

### Bezugszeichenliste

- 1: Längsträger
- 2: offenes Profil
- 3: Hohlkammerprofil
- 4: geschlossenes Profil
- 5: Antriebsbatterie
- 6: Bauraumbedarf

## Patentansprüche

1. Kraftfahrzeug mit einem tragenden Fahrzeugrahmen, wobei der Fahrzeugrahmen einen Längsträger (1) aufweist,
**dadurch gekennzeichnet , dass** der Längsträger (1) zumindest in einem Abschnitt entlang dessen Längserstreckung, nämlich in einem Energieabsorberabschnitt, durch ein zur Fahrzeugaußenseite hin offenes Profil (2) ausgebildet ist, vorzugsweise ein C-Profil, wobei in das offene Profil (2) zumindest abschnittsweise ein Hohlkammerprofil (3) mit mehreren Hohlkammern aufgenommen ist.

2. Kraftfahrzeug nach Anspruch 1,
**dadurch gekennzeichnet , dass** das offene Profil (2) ein Stahlprofil ist und/oder dass das Hohlkammerprofil (3) ein Strangpressprofil ist und/oder dass das Hohlkammerprofil (3) aus Aluminium besteht.

3. Kraftfahrzeug nach zumindest einem der vorhergehenden Ansprüche,
**dadurch gekennzeichnet , dass** das Hohlkammerprofil (3) das offene Profil (2) in Fahrzeug Z-Richtung und/oder Y-Richtung und/oder X-Richtung im Wesentlichen vollständig ausfüllt.

4. Kraftfahrzeug nach zumindest einem der vorhergehenden Ansprüche,
**dadurch gekennzeichnet , dass** das Hohlkammerprofil (3) in Fahrzeug Y-Richtung zur Fahrzeugaußenseite hin über das offene Profil (2) überragt, wobei bevorzugt das Hohlkammerprofil (3) etwa doppelt so breit ist, wie das offene Profil (2).

5. Kraftfahrzeug nach zumindest einem der vorhergehenden Ansprüche,
**dadurch gekennzeichnet, dass** der Längsträger (1) zumindest in einem Abschnitt entlang dessen Längserstreckung, vor und/oder hinter dem Energieabsorberabschnitt, durch ein geschlossenes Profil (4) ausgebildet ist, bevorzugt durch ein Rechteteckprofil.

6. Kraftfahrzeug nach zumindest einem der vorhergehenden Ansprüche,
**dadurch gekennzeichnet, dass** das Kraftfahrzeug eine Antriebsbatterie (5) umfasst, wobei die Antriebsbatterie (5) in Längsrichtung des Kraftfahrzeugs im Wesentlichen im Energieabsorberabschnitt angeordnet ist.

7. Kraftfahrzeug nach zumindest einem der vorhergehenden Ansprüche,
**dadurch gekennzeichnet, dass** das Kraftfahrzeug zwei gleichartige Längsträger (1) aufweist, wobei eine Antriebsbatterie (5) des Kraftfahrzeugs zwischen den beiden Längsträgern (1) angeordnet ist.
